# EUROPÄISCHE PATENTSCHRIFT

(11) **EP 2 322 338 B1**
(45) Veröffentlichungstag und Bekanntmachung des Hinweises auf die Patenterteilung: **05.12.2018**
(21) Anmeldenummer: 10014097.9
(22) Anmeldetag: 29.10.2010
(51) Int. Cl.: B29C 45/18, B29C 45/63, B29C 45/60

(54) **Verfahren zum Spritzgiessen von Kunststoffteilen**
Method for injection moulding of plastic parts
Procédé de moulage par injection de pièces en plastique

(30) Priorität: 11.11.2009 DE 102009052784
(43) Veröffentlichungstag der Anmeldung: 18.05.2011
(73) Patentinhaber: Baratti Engineering GmbH, 79664 Wehr (DE)
(72) Erfinder: Baratti, Gerhard, 3914 Belalp (CH)
(74) Vertreter: Mehl-Mikus, Claudia

(56) Entgegenhaltungen:
- EP-A1- 0 623 446
- GB-A- 1 528 429
- JP-A- 62 151 317
- US-A- 4 112 519
- US-A- 5 968 429

## Beschreibung

Die Erfindung betrifft ein Verfahren zum Spritzgießen von Kunststoffteilen nach dem Oberbegriff des Anspruchs 1.

Der Kunststoff (PET etc.), der zum Spritzgießen von Kunststoffteilen in Spritzgießwerkzeugen verwendet wird, ist hygroskopisch. Der Kunststoff nimmt dabei bereits durch die Luftfeuchtigkeit Wasser bei der Lagerung sowie beim Transport auf. Diese aufgenommene Feuchte ist beim Verarbeiten des Kunststoffs hin zum Endprodukt, nämlich dem gespritzten Kunststoffteil, für die Qualität dieses Kunststoffteils schädlich.

Aus diesem Grunde ist es bekannt, den Kunststoff in Form von Kunststoffgranulat vor dem Verarbeiten im Spritzgießwerkzeug in einem vorangehenden, separaten Prozeß zu trocknen. Hierzu wird Warmluft in Trockenlufttrocknern verwendet. Der so getrocknete Kunststoff kann dann dem Spritzgießwerkzeug zugeführt werden.

Dieses Vortrocknen des Kunststoffgranulats erfolgt unter Atmosphärendruck durch Aufheizen und durch Durchspülen des Kunststoffgranulats mit Trockenluft in entsprechend isolierten Behältern. Die feuchte Luft wird dabei im Kreislauf in Adsorptionskolonnen geführt, in welchen die Luft getrocknet und anschließend wieder zum Granulat zurückgeführt wird. Die Adsorptionselemente müssen dabei mit viel Energieaufwand wieder regeneriert werden, damit sie weitere Feuchte aufnehmen können. Zu diesem Zyklus gehören zusätzlich Gebläse, welche die neue Luft im Kreislauf führen. Nach diesem vorgeschalteten Trocknungsprozeß kann das so getrocknete Kunststoffgranulat dem Spritzgießwerkzeug zugeführt werden.

EP0623446 offenbart ein Verfahren zum Spritzgießen von Kunststoffteilen, gemäß dem Oberbegriff des Anspruchs 1.

JPS62151317 offenbart ein Verfahren zum extrudieren von Kunststoffteilen. Davon ausgehend liegt der Erfindung die Aufgabe zu Grunde, ein Verfahren zum Spritzgießen von Kunststoffteilen zu schaffen, bei dem die Trocknung des Kunststoffs vor dem Zuführen zum Spritzgießwerkzeug verbessert ist.

Die technische Lösung wird durch ein Verfahren mit den Merkmalen des Anspruchs 1 bereitgestellt.

Die Grundidee des Verfahrens zum Spritzgießen von Kunststoffteilen besteht darin, die Trocknung des Kunststoffausgangsmaterials direkt bei der Materialzuführung, nämlich während des Überführens des Kunststoffgranulats in den viskosen Zustand durchzuführen. Dies bedeutet, daß die Trocknung des Kunststoffgranulats während seiner Erwärmung und/oder durch seine Erwärmung erfolgt. Das zu verarbeitende Kunststoffausgangsmaterial wird somit direkt von der Lagerstelle (Silo, Big Bag etc.) zur Spritzgießmaschine gefördert und dort in seinem feuchten Ausgangszustand in die Materialzuführungsschnecke eindosiert. Dies bedeutet, daß das Kunststoffausgangsmaterial nicht mehr wie bisher zwei Mal erwärmt wird, sondern nur noch ein Mal, nämlich bis zur viskosen Schmelztemperatur in dem Schneckenförderer. Durch diesen Trocknungsprozeß direkt bei der Materialzuführung zum Spritzgießwerkzeug wird eine sehr hohe Energieeinsparung im Vergleich zum bisher verwendeten, separaten Vortrocknungsprozeß erreicht. Denn das Ausgangsskunststoffmaterial wird nur noch ein Mal bis zur viskosen Schmelztemperatur aufgeheizt und dabei gleichzeitig getrocknet und ggfs. entgast, im Gegensatz zu den früheren zwei Aufheizvorgängen. Ein weiterer Vorteil besteht darin, daß eine zusätzliche Förderung vom Lagerplatz zum Vortrockner und anschließend vom Vortrockner zur Spritzgießmaschine entfällt, da die Förderung direkt vom Lagerplatz bis zum Ort der Verarbeitung, nämlich dem Spritzgießwerkzeug bzw. dessen vorgeschalteten Schneckenförderer erfolgt. Dies schafft eine hohe Einsparung an Förderkapazität. Dadurch kann schließlich auch eine direkte Umstellung von unterschiedlichen Materialien in Verbindung mit einer dadurch bedingten hohen Flexibilität geschaffen werden. Im Stand der Technik mußte immer eine Vorlaufzeit zur Trocknung des Kunststoffgranulats mit einberechnet werden.

Die Erwärmungszone für den Kunststoff weist eine atmosphärische Belüftung auf. Konkret bedeutet dies, daß der Kunststoff während seiner Erwärmung in den viskosen Zustand getrocknet und/oder entgast wird, bevor er dem Spritzgießwerkzeug zugeführt wird, wobei vor Erreichen der Vakuumentgasungszone eine atmosphärische Be- und Entlüftung des Kunststoffgranulats zu dessen Oberflächentrocknung durchgeführt wird. Diese atmosphärische Belüftung dient somit der Oberflächentrocknung des Kunststoffgranulats. In dieser atmosphärischen Belüftungszone wird oberhalb einer Temperatur von 100°C an den speziell dafür vorgesehenen Entlüftungsdüsen die Oberflächenfeuchte des Kunststoffgranulats unter Atmosphärendruck getrocknet. Da die entsprechende Erwärmungstemperatur ohnehin vorhanden ist (das feste Kunststoffgranulat muß in den viskosen Zustand übergeführt werden), bedeutet dies, daß keine zusätzliche Energie benötigt wird.

In der Erwärmungszone wird für den Kunststoff ein Vakuum erzeugt Die Grundidee besteht darin, daß nach der atmosphärischen Belüftung mit der Oberflächentrocknung des Kunststoffgranulats eine Vakuumentgasungszone mit einem oder mehreren Vakuumanschlüssen vorgesehen ist, welche die Erwärmungszone in diesem Bereich mit Vakuum beaufschlagt und neben einer Trocknung für eine Entgasung der Lufteinschlüsse sorgt. In dieser Zone ist die Geometrie der Zuführschnecke vorzugsweise so ausgelegt, daß der Zylinder eine möglichst große Oberfläche des Kunststoffes zur Entgasung und sowie zur Trocknung freigibt. Das Material wird während der Zuführung in der Vakuumzone durch das Vakuum entgast (Entzug der Lufteinschlüsse) und getrocknet (Verdampfen der Restfeuchte unter Vakuum sowie Abzug des Dampfes unter Vakuum). In der nachfolgenden Druckzone wird dann der viskose Kunststoff verdichtet und ist für die Einspritzung in das entsprechende Formenwerkzeug bereit. Diese Vakuumtrocknung stellt eine sehr effektive Möglichkeit zum Entfeuchten sowie zum Entgasen des Kunststoffs dar. Da die Trocknung unter Vakuum erfolgt, wird bedeutend weniger Energie benötigt.

Die Durchführung des Verfahrens erfolgt mit einer entsprechenden Vorrichtung, deren Vorteile dem entsprechen, was zuvor im Zusammenhang mit dem Verfahren des Anspruchs 1 beschrieben worden ist.

Zusammengefaßt ist dem Schneckenförderer eine Trocken- und/oder Entgasungseinrichtung zum Trocknen und/oder Entgasen des im Schneckenförderer befindlichen Kunststoffs zugeordnet, wobei der Schneckenförderer an eine Vakuumeinrichtung angeschlossen ist. Dabei weist ein Zylinder des Schneckenförderers in Transportrichtung des Schneckenförderers gesehen vor der Vakuumeinrichtung wenigstens eine atmosphärische Belüftungsöffnung auf.

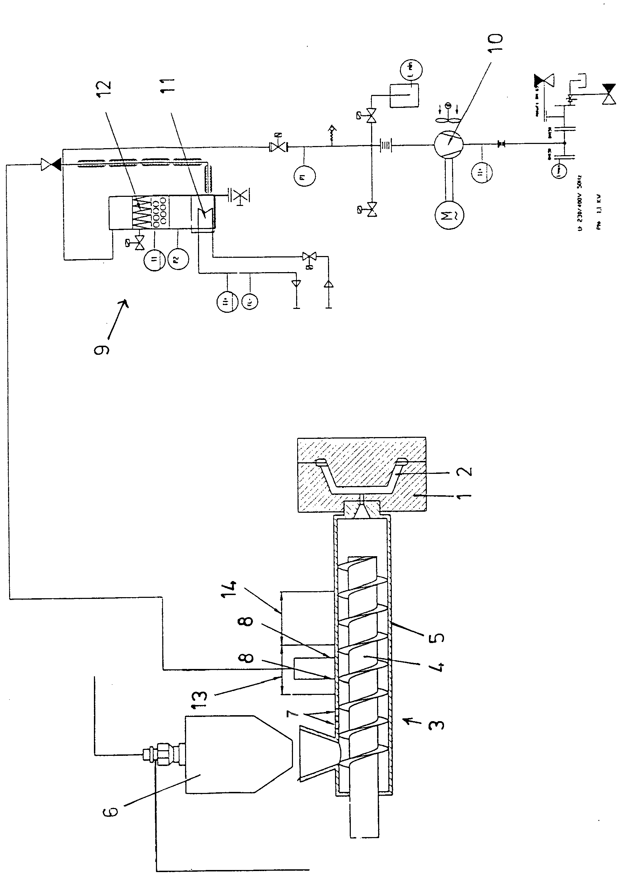

Eine solche Vorrichtung zum Spritzgießen von Kunststoffteilen wird nachfolgend anhand der Zeichnung beschrieben. Diese zeigt in einer schematischen Darstellung die Gesamtanlage.

Zum Spritzgießen von Kunststoffteilen wird ein - rein schematisch dargestelltes - Spritzgießwerkzeug 1 verwendet. In diesem Spritzgießwerkzeug 1 sind ein oder mehrere Formenhohlräume 2 ausgebildet, welchen viskoser Kunststoff zugeführt wird. Nach dem Erkalten des zugeführten Kunststoffs wird das Spritzgießwerkzeug 1 geöffnet, und das Kunststoffteil kann entnommen werden.

Zum Zuführen des viskosen Kunststoffs dient ein vorgeschalteter Schneckenförderer 3 mit einer Förderschnecke 4, welche in einem Zylinder 5 drehbar angetrieben ist. Die Förderschnecke 4 liegt dabei dichtend an der Innenwandung des Zylinders 5 an. Dieser Schneckenförderer 3 weist am einen Ende eine Zuführeinrichtung 6 für Kunststoffgranulat auf. Weiterhin ist der Zylinder 5 beheizt.

Schließlich weist er zwei Belüftungsöffnungen 7 sowie - in Förderrichtung gesehen dahinter - zwei Vakuumanschlüsse 8 einer Vakuumeinrichtung 9 auf. Diese Vakuumeinrichtung 9 besitzt ein Vakuumgerät 10, einen Sublimator 11 sowie einen Vorfilter 12.

Die Funktionsweise ist wie folgt:
Über die Zuführeinrichtung 6 des Zylinders 5 des Schneckenförderers 3 wird diesem Schneckenförderer 3 im Ausgangszustand feuchtes Kunststoffgranulat zugeführt. Da der Zylinder 5 des Schneckenförderers 3 über seine gesamte Länge beheizt ist, wird während der Vorwärtsbewegung des Kunststoffgranulats längs des Schneckenförderers 3 dieses allmählich erwärmt, bis es einen viskosen Zustand erreicht, um es dann dem Spritzgießwerkzeug 1 zuzuführen.

Während dieser Erwärmung des Kunststoffgranulats entweicht in einer ersten Stufe das verdampfte Oberflächenwasser durch die Belüftungsöffnungen 7 hindurch in die Atmosphäre.

An die atmosphärische Entlüftungszone schließt sich für das bereits erwärmte Kunststoffgranulat in einer zweiten Stufe eine Vakuumzone 13 an, welche durch die beiden Vakuumanschlüsse 8 definiert ist. Diese Vakuumzone 13 beaufschlagt mit der Vakuumeinrichtung 9 das Innere des Zylinders 5 in diesem Bereich mit Vakuum. Durch das Vakuum wird der Kunststoff entgast (Entzug der Lufteinschlüsse) sowie getrocknet (Verdampfung der Restfeuchte unter dem Vakuum und Abzug des Dampfes). Damit im Bereich dieser Vakuumzone 13 das Vakuum innerhalb des Zylinders 5 aufrecht erhalten bleibt, schließt die Förderschnecke 4 mit dem Innenmantel des Zylinders 5 dichtend ab.

Der vorbeschriebenen Vakuumzone 13 folgt dann eine Druckzone 14, von wo aus der entgaste und getrocknete, viskose Kunststoff dem Spritzgießwerkzeug 1 zugeführt wird.
feuchte unter dem Vakuum und Abzug des Dampfes). Damit im Bereich dieser Vakuumzone 13 das Vakuum innerhalb des Zylinders 5 aufrecht erhalten bleibt, schließt die Förderschnecke 4 mit dem Innenmantel des Zylinders 5 dichtend ab.

Der vorbeschriebenen Vakuumzone 13 folgt dann eine Druckzone 14, von wo aus der entgaste und getrocknete, viskose Kunststoff dem Spritzgießwerkzeug 1 zugeführt wird.

### Bezugszeichenliste

- 1: Spritzgießwerkzeug
- 2: Formenhohlraum
- 3: Schneckenförderer
- 4: Förderschnecke
- 5: Zylinder
- 6: Zuführeinrichtung
- 7: Belüftungsöffnung
- 8: Vakuumanschluß
- 9: Vakuumeinrichtung
- 10: Vakuumgerät
- 11: Sublimator
- 12: Vorfilter
- 13: Vakuumzone
- 14: Druckzone

## Patentansprüche

1. Verfahren zum Spritzgießen von Kunststoffteilen,
bei dem zunächst ein zugeführtes Kunststoffgranulat erwärmt und in seinen viskosen Zustand übergeführt wird und
bei dem anschließend der viskose Kunststoff zum Spritzgießen des Kunststoffteils einem Spritzgießwerkzeug (1) zugeführt wird,
wobei der Kunststoff während seiner Erwärmung in den viskosen Zustand getrocknet und/oder entgast wird, bevor er dem Spritzgießwerkzeug (1) zugeführt wird,
**dadurch gekennzeichnet, dass**
nach dem Zuführen des Kunststoffgranulats und vor Erreichen einer Vakuumentgasungszone eine atmosphärische Be- und Entlüftung oberhalb einer Temperatur von 100 °C zur Trocknung der Oberflächenfeuchte des erwärmten und noch festen Kunststoffgranulats durchgeführt wird.

## Claims

1. Method for injection molding of plastic parts,
wherein first of all a supplied plastic granulate is warmed and converted into its viscous state and
wherein the viscous plastic for injection molding of the plastic part is fed to an injection-molding tool (1) subsequently,
wherein the plastic is dried and/or degassed during its warming into the viscous state, before being fed to the injection mold (1),
**characterized in that**
after feeding the plastic granulates and before reaching a vacuum degassing zone, an atmospheric ventilation above a temperature of 100 °C for drying the surface moisture of the warmed and still solid plastic granules is performed.

## Revendications

1. Procédé pour le moulage par injection des pièces en plastique,
dans lequel tout d'abord, un granulat de plastique est chauffé et transformé en son état vis queux et
dans lequel le plastique visqueux pour le moulage par injection de la pièce en plastique est ensuite alimenté dans un moule d'injection (1),
dans lequel le plastique est séché et/ou dégazé pendant son chauffage à l'état visqueux, avant d'être introduit dans le moule d'injection (1),
**caractérisé par le fait que**
après alimenter le granulat de plastique et avant d'atteindre une zone de dégazage sous vide, on effectue une ventilation atmosphérique supérieure dans une température de 100 °C pour sécher l'humidité de surface de le granulat de plastique chauffés et encore solides.
